# EUROPEAN PATENT SPECIFICATION

(11) **EP 2 148 550 B1**
(45) Date of publication and mention of the grant of the patent: **26.01.2011**
(21) Application number: 08252208.7
(22) Date of filing: 27.06.2008
(51) Int. Cl.: H04W 92/04, H04W 72/00

(54) **Base station and method of determining whether to set up a call**
Basisstation und -verfahren zur Bestimmung, ob ein Anruf aufgebaut werden soll
Station de base et procédé pour déterminer s'il faut configurer un appel

(43) Date of publication of application: 27.01.2010
(73) Proprietor: Alcatel-Lucent USA Inc., Murray Hill, NJ 07974-0636 (US)
(72) Inventor: Claussen, Holger, Swindon SN5 3NJ Wiltshire (GB); Shahid, Malek, Chippenham SN14 0TJ Wiltshire (GB); Samuel, Louis Gwyn, Swindon SN5 5DQ Wiltshire (GB)
(74) Representative: Sarup, David Alexander

(56) References cited:
- EP-A- 0 714 180
- WO-A-2008/041929
- US-A1- 2006 250 953

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term picocells generically for cells that are smaller than macrocells. One way to establish a picocell is to provide a picocell base station that operates within a relatively limited range within the coverage area of a macrocell. One example of use of a picocell base station is to provide wireless communication coverage within a building.

The picocell base station is of a relatively low transmit power and hence each picocell is small compared to a macrocell.

Picocell base stations are intended primarily for users belonging to a particular home or office. Picocell base stations may be private access or public access. In private access picocell base stations, access is restricted only to registered users, for example family members or particular groups of employees. In public access picocell base stations, other users may also use the picocell base station, subject to certain restrictions to protect the Quality of Service receives by registered users.

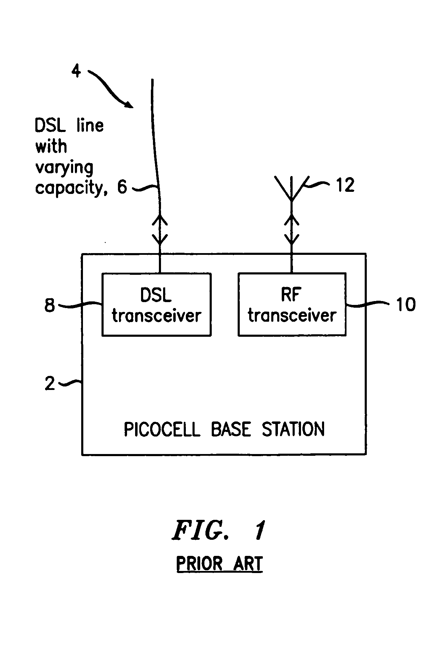

As shown in Figure 1, a known Picocell base station 2 uses a broadband Internet Protocol connection 4 as "baekhaul", namely for connecting to the core network (not shown). One type of broadband Internet Protocol connection is a Digital Subscriber Line (DSL) 6. The DSL 6 connects a DSL transmitter-receiver ("transceiver") 8 of the picocell base station 2 to the core network. The DSL 6 allows voice calls and other services provided via the picocell base station 2 to be supported.

The picocell bases station also includes a radio frequency (RF) transceiver 10 connected to an antenna 12 for radio communications.

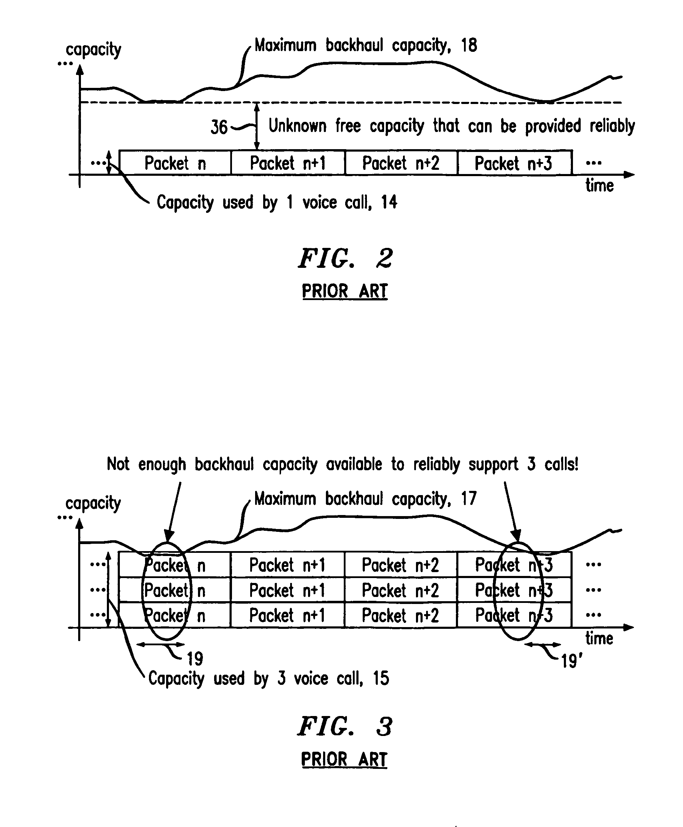

As shown in Figure 2, the backhaul capacity 18 varies over time. When there is one active voice call 14 being handled, say requiring a fixed data rate of say 60 kpbs in each direction, the amount of additional capacity 16 that the backhaul can provide reliably for additional users or services is unknown.

As shown in Figure 3, the aggregated data rate, i.e backhaul capacity, required by several simultaneous calls may, at times, exceed the backhaul capacity that is available. In the example shown in Figure 3, the backhaul capacity denoted 15 required by three simultaneous voice calls exceeds the time-varying backhaul capacity denoted 17 at certain time periods 19, 19'. However, given that some calls require a quality of service dependent upon a high data rate and low latency (i.e. little delay), buffering data for transmission at times when there is lower available backhaul capacity (in other words lower available data rate) may not be desirable. This is particularly so for voice calls. Should the available capacity drop below that which is needed, some or all of the calls will be subject to unacceptable delay. The quality of service of the affected calls then falls below thresholds for good or acceptable voice call quality.

It is known from International (P.C.T.) Patent Publication WO2008/041929 to provide a method in a base station for wireless telecommunications having an interface to a telecommunications core network of determining whether to set-up a call in response to a call request, the method comprising the following steps:
sending test data to the interface;
measuring transmission by the interface of the test data so as to obtain information in respect of data rate that the interface can handle;
deciding whether or not to set up the call dependent upon said information;
and dependent upon said decision setting-up the call or refusing call set-up.

### Summary of the Invention

The present invention is characterised over the disclosure of WO2008/041929 in that increasing data rate of transmission of user data in selected user data packets so as to create temporal gaps in which the test data is sent; and
the measuring transmission is by measuring the time required to transmit the test data, so as to determine the data rate that the interface can handle.

The reader is referred to the appended independent claims. Some preferred features are laid out in the dependent claims.

The inventors found a way to determine whether to admit a call in a base station by estimating backhaul capacity and considering that as a factor in the decision.

In one embodiment, the backhaul capacity, i.e. data rate, is estimated that can be reliably supported, and the number of calls is limited in consequence to this capacity level.

Preferred embodiments allow picocell base stations with a variable capacity backhaul, such as including a Digital Subscriber Line (DSL), to consistently support high quality voice calls by ensuring calls are only admitted that can be reliably supported by the backhaul. Calls may be voice calls or data sessions.

### Brief Description of the Drawings

Embodiments of the present invention will now be described by way of example and with reference to the drawings, in which:
Figure 1 is a diagram illustrating a known picocell base station (PRIOR ART)
Figure 2 is a diagram illustrating a known example of available backhaul capacity over time for the picocell base station shown in Figure 1 (PRIOR ART),
Figure 3 is a diagram illustrating another known example of available backhaul capacity over time for the picocell base station shown in Figure 1 (PRIOR ART),
Figure 4 is is a diagram illustrating a wireless communications network according to a first embodiment of the present invention,
Figure 5 is a diagram illustrating the picocell base station shown as part of the network in Figure 4,
Figure 6 is a diagram illustrating in more detail the DSL data rate (i.e. capacity) measurement unit which is part of the picocell shown in Figure 5,
Figure 7 is a diagram illustrating the method of backhaul capacity measurement used,
Figure 8 is a further diagram illustrating the method of backhaul capacity measurement used, and
Figure 9 is a diagram illustrating an alternative method of backhaul capacity measurement according to a second embodiment of the present invention.

### Detailed Description

When considering a known system, the inventor(s) realised that the two interfaces that tend to get congested are the air interface and the backhaul. The inventors realised that upon receiving a request for a new call connection, the picocell base station can be configured to make a decision whether the call at the required rate and quality of service can be supported or not.

We now describe a network including picocell base stations then look in greater detail at a picocell base station and the relevant operation of the picocell base station.

### Network

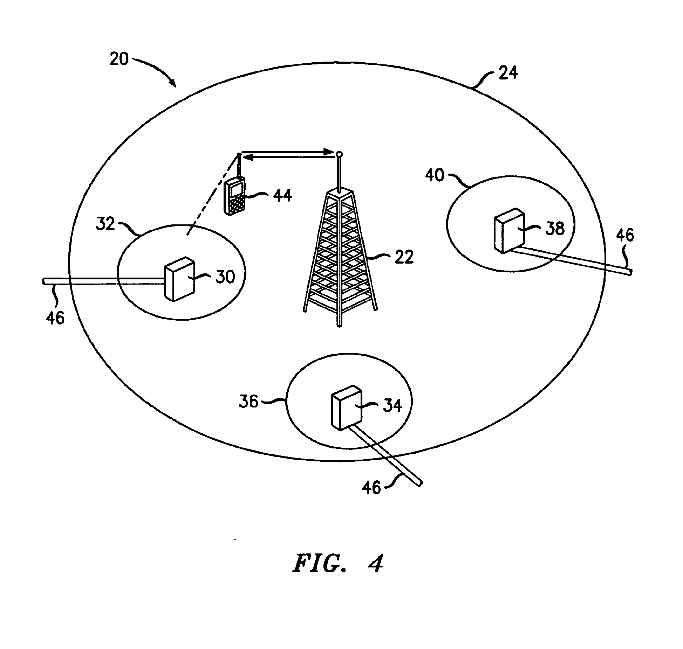

As shown in Figure 4, in one communication network 20, there are two types of base stations (often denoted BS or BSs) : macrocell base stations and picocell base stations. One macrocell base station 22 for wireless telecommunications is shown for simplicity in Figure 4. The macrocell base station has a radio coverage area 24 that is often referred to as a macrocell. The geographic extent of the macrocell 24 depends on the capabilities of the macrocell base station 22 and the surrounding geography.

Within the macrocell 24, a picocell base station 30 provides wireless communications within a picocell 32. A picocell is a radio coverage area. The radio coverage area of the picocell 30 is much less than that of the macrocell 24. For example, the picocell 32 corresponds in size to a user's home.

Another picocell base station 34 provides wireless coverage within a picocell 36. A further picocell 38 provides wireless coverage within a picocell 40.

It is possible for a mobile terminal 44 within the macrocell 24 to communicate with the macrocell base station 22 in known manner. When the mobile terminal 44 enters into a picocell 32 for which the mobile terminal is registered for communications within the picocell base station 30, it is desirable to handover the connection with the mobile terminal from the macrocell to the picocell. In the example shown in Figure 1, the user of mobile terminal 44 is a preferred user to use the picocell 32.

As shown in Figure 4, the picocell base stations 30,34,38 and macrocell base station 22 are connected via broadband Internet Protocol connections ("backhaul") 46 to a core network (not shown in Figure 4) and hence the rest of the telecommunications "world" (not shown in Figure 4).

### Picocell base station

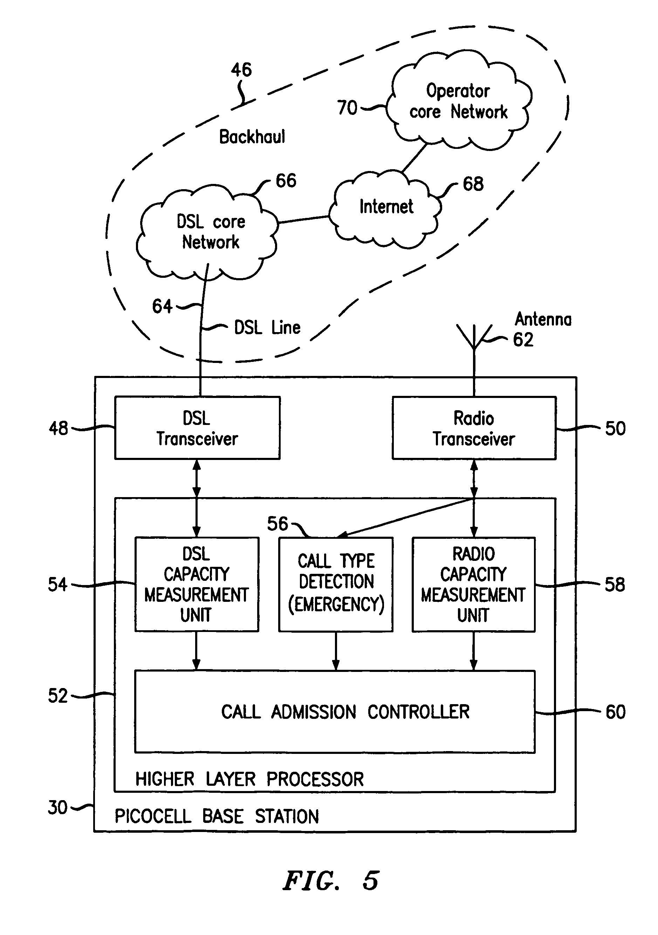

As shown in Figure 5, the picocell base station 30 includes a Digital Subscriber Line (DSL) transceiver 48, a radio transceiver 50, and a processor 52. In the processor 52, there is a DSL capacity measurement unit 54, a call type detector 56 and a radio capacity measurement unit 58. The DSL capacity measurement unit 54 is connected to the DSL transceiver 48. The call type detector 56 and radio capacity measurement unit 58 are connected to the radio transceiver 50.

The DSL capacity measurement unit 54, call type detector 56 and radio capacity measurement unit 58 are also all connected to a call admission controller 60.

The radio transceiver 50 is connected to an antenna 62.

The DSL transceiver 48 is connected to the backhaul 46. Specifically, the backhaul 46 includes a DSL line 64 connected to a DSL core network 66 connected via the internet 68 to an operator's core network 70.

The DSL capacity, in other words backhaul capacity, varies over time, since multiple households are connected to a DSL central node of the DSL core network 66, and have to share the rapacity of that node. In this example, the backhaul 46 "tunnels" through the internet 68, so additional "bottle-necks" may appear that influence the available capacity.

As will be described in more detail later in this text, the call admission controller 60 decides whether to admit a requested new call based on data of available capacity on the DSL (received from the DSL capacity measurement unit 54), data whether or not the call is of emergency call type (from the call type detector 56) and data of available radio capacity (from the radio capacity measurement unit 58).

### Determining backhaul capacity

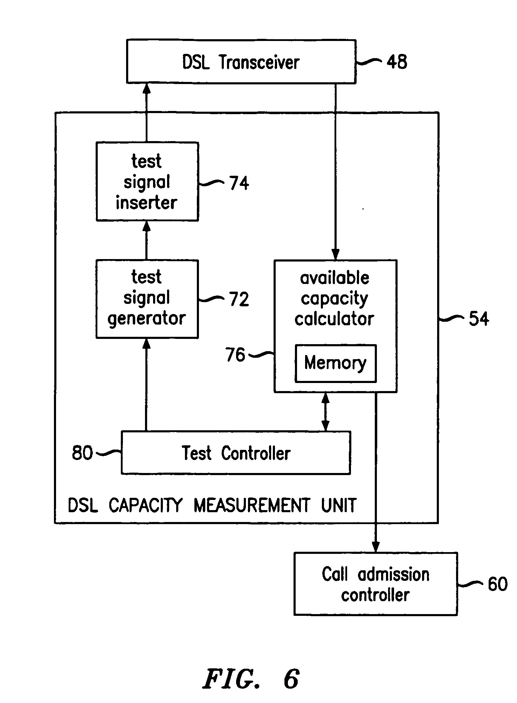

Turning to Figure 6, we now consider the Digital Subscriber Line (DSL) capacity measurement unit 54 in more detail.

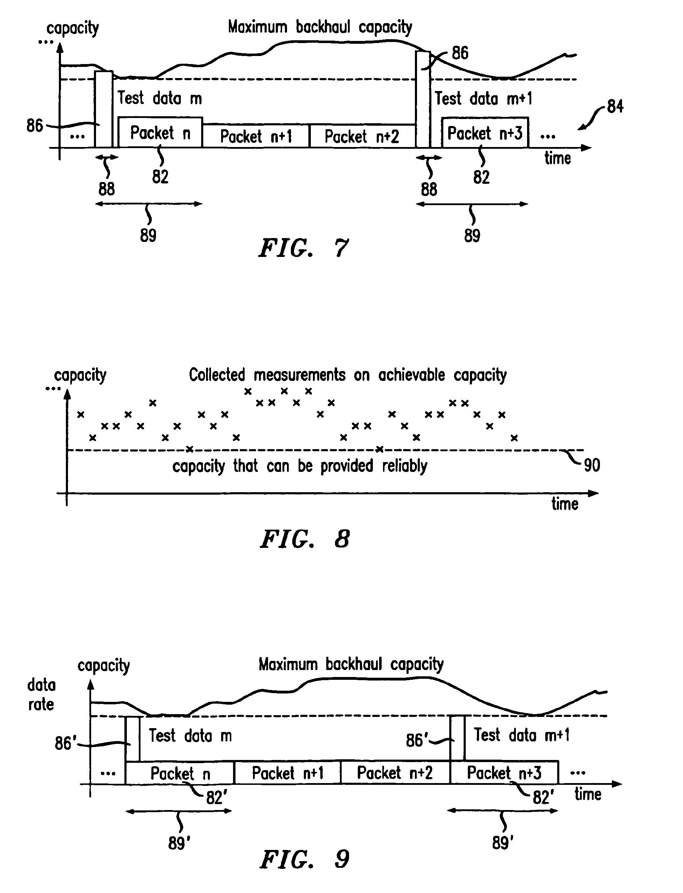

As shown in Figure 6. the DSL capacity measurement unit 54 contains a test signal generator 72 connected to a test signal inserter 74. The test signal inserter 74 is operative to increase the data rate of selected voice packet of a stream of voice packets so as to allow insertion of test signals in the resultant temporal spaces, as described in more detail below in respect of Figure 7.

The DSL capacity measurement unit 54 also includes an available-capacity calculator 76, which calculates the available capacity that is reliably provided by the DSL, by measurements of times for transmission of test data signals. This is described in more detail below in respect of Figure 8.

The test signal generator 72 and available capacity calculator 76 are connected to a test controller 80 which controls the above described operations.

In order to make decisions on how many calls can be supported at a time, the backhaul capacity is determined periodically.

### Inserting Test Signals

In this example, it is the uplink backhaul capacity which is measured, as this is usually the limiting direction for the DSL connections. The DSL connections are typically asymmetric.

As shown in Figure 7, the test signal inserter 74 acts to increase the data rate of selected voice packets 82 of each current stream 84 of voice packets and to insert test signals 86 in the resultant temporal spaces 88. In the example shown, there is one current stream 84 i.e. one current voice call.

In other words, an existing voice data stream is sent in discontinuous transmit mode whereby voice packets 82 that are transmitted within the same time slot of 20milliseconds as test data signals 86 are slightly "compressed" in time so that they required a correspondingly increased data rate and a gap 88 for the test data is created. These slots are called test slots 89.

This change of data rate has a limited impact on perceived speech quality.

### Measuring transmission times and calculating available capacity

The available data rate at each test slot 89 is determined by measuring the time required to transmit test data signals, more specifically the time required for the Digital Subscriber Line (DSL) line 64 to accept the test data. This is done periodically, for example every second. Figure 8 illustrates a resultant collection of determinations of available data rates at various times.

In Figure 8, determinations of available data rate at various times are shown as crosses. Data rate determinations are also referred to as capacity measurements. From these capacity measurements the total capacity 90 that can be reliably provided is determined.

In an example, the total capacity can be selected as that which can be achieved in 98% of a selected time period during which measurements are taken, for example the time of a typical call, say three minutes.

As regards the test data signals 86, the time for transmission for that data needs to be less than the gap in the test slot created by compressing the voice packet. Accordingly, if the test data transmission time becomes close to the gap size then the number of test data bits is reduced. Conversely, if the gap is much larger than the time required for transmission of the test data, the number of test data bits is increased to improve measurement accuracy. In this way, the amount of test data is adaptive to measured data rate.

### Call Admission

Upon a new outgoing call being requested by a user terminal registered by the picocell base station 30, the call admission controller 60 acts to decide whether to admit the requested new call. If sufficient capacity is not available, the request for an additional outgoing call is refused.

The call admission controller 60 acts to reserve some capacity for incoming calls, for example to support one further incoming call reliably. However, when that capacity is used up, an incoming call may be barred, for example the caller receiving a busy tone.

The decision of the call admission controller 60 takes account of the total capacity 90 that can be provided reliably, and knowledge of the number of currently active calls and their respective capacity requirements (for example warranted Quality of service specifications). Only if the expected capacity requirement of the requested new call is less than that still available is the new call admitted, i.e. set-up.

As mentioned previously in respect of Figure 5, the call admission controller 60 takes into account a number of factors besides available backhaul capacity, and what backhaul capacity the requested new call would require. These other factors are data whether or not the call is of emergency call type (from the call type detector 56) and data of available radio capacity (from the radio capacity measurement unit 58).

In the case that a new call is an emergency call, it is always admitted. If the available backhaul capacity is not sufficient due to other ongoing calls, then one of the less important calls is dropped, namely a non-emergency call.

### Variants

In an otherwise similar embodiment, instead of adapting the amount of test data, the gap size created in a test slot by compressing the voice packet can be adapted so as to accommodate a fixed amount of test data.

As shown in Figure 9, in another, otherwise similar, embodiment, instead of compressing voice packets of test slots 89', test data 86' can be transmitted at the same time as voice packets 82', in otherwords in parallel with that voice data. If the voice packets 82' and test data 86' are consistently transmitted successfully, then it is considered that at least that additional backhaul capacity can be reliably provided.

On the other hand, if not enough capacity is available, for example if one voice packet is disrupted or the test data takes longer than is acceptable for Digital Subscriber Line (DSL) transmission, then the test transmissions are continued at a lower data rate or stopped completely for the duration of the on-going voice call. In consequence, the impact would be minimal of the measurements on the voice quality of the call.

This developments applicable to picocell base stations. Other examples relate to other types of base stations for wireless telecommunications, such as macrocells, that using backhauls of time-varying capacities.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method in a base station (30) for wireless telecommunications having an interface (64) to a telecommunications core network (66,68,70) of determining whether to set-up a call in response to a call request, the method comprising the following steps:
sending (72,74) test data to the interface;
measuring (54) transmission by the interface of the test data so as to obtain information in respect of data rate that the interface can handle;
deciding (60) whether or not to set up the call dependent upon said information; and dependent upon said decision setting-up the call or refusing call set-up;
**characterised by**
increasing (74) data rate of transmission of user data in selected user data packets so as to create temporal gaps (88) in which the test data is sent; and
the measuring transmission is by measuring the time required to transmit the test data, so as to determine the data rate that the interface can handle.

2. A method according to claim 1, further comprising taking the measured data rate of the test data as the current maximum data rate of the interface.

3. A method according to claim 1 or claim 2, in which at least one of gap size and amount of test data to insert in a respective gap (88) is adjusted so that the test data better fits the temporal gap.

4. A method according to any preceding claim, in which the steps of sending and measuring are repeated over time to provide a reliable estimate (90) of maximum data rate of the interface (64); and
the decision whether or not to admit the call depends on whether admitting the call would cause the reliable estimate of maximum data rate of the interface to be exceeded.

5. A method according to any preceding claim, in which the base station is a picocell base station, and the call is a voice call.

6. A method according to any preceding claim, in which the interface (64) is a backhaul interface having a time-varying maximum data rate.

7. A method according to any preceding claim, in which the interface is a Digital Subscriber Line (DSL) interface.

8. A method according to any preceding claim, in which other factors considered in deciding whether or not to admit the call are whether (56) the call is an emergency call and (58) availability of radio resources.

9. A base station (30) for wireless telecommunications having an interface (64) to a telecommunications core network, the base station comprising: determining means (60) operative to determine whether to set-up a call connection in response to a call request, the determining means comprising:
test signal sending means (74,78) operative to send test data at a predetermined rate to the interface (64);
measurement means (48,54) operative to measure transmission by the interface of the test data so as to obtain information in respect of data rate that the interface can handle;
decision means (60) operative to decide whether or not to set up the call dependent upon said information;
and call control means (60) operative to allow or refuse call set-up dependent upon said decision;
**characterised in that**
the base station comprises means (74) to increase data rate of transmission of user data in selected user data packets so as to create temporal gaps (88) in which the test data is sent,
the measurement means is operative to measure transmission by measuring the time required for the interface to transmit the test data, so as to determine the data rate that the interface can handle.

## Patentansprüche

1. Ein Verfahren in einer Basisstation (30) für die drahtlose Telekommunikation mit einer Schnittstelle (64) zu einem Telekommunikations-Kernnetzwerk (66, 68, 70) zum Bestimmen, ob im Anschluss an eine Anrufanforderung ein Anruf aufgebaut werden soll, wobei das Verfahren die folgenden Schritte umfasst:
Senden (72,74) von Testdaten an die Schnittstelle;
Messen (54) der Übertragung, durch die Schnittstelle, der Testdaten, um Informationen in Bezug auf die Datenrate, welche die Schnittstelle verarbeiten kann, zu erhalten;
Entscheiden (60), ob der Anruf aufgebaut werden soll oder nicht, gemäß den besagten Informationen; und gemäß der besagten Entscheidung, Aufbauen des Anrufs oder Verweigern des Anrufaufbaus;
**gekennzeichnet durch**
Erhöhen (74) der Datenrate der Übertragung von Benutzerdaten in ausgewählten Benutzerdatenpaketen, um zeitliche Lücken (88) zu erzeugen, in welchen die Testdaten gesendet werden; und
Messen der Übertragung **durch** Messen der für die Übertragung der Testdaten erforderlichen Zeit, um die Datenrate, welche die Schnittstelle verarbeiten kann, zu bestimmen.

2. Ein Verfahren nach Anspruch 1, weiterhin umfassend das Verwenden der gemessenen Datenrate der Testdaten als die aktuell maximale Datenrate der Schnittstelle.

3. Ein Verfahren nach Anspruch 1 oder Anspruch 2, wobei mindestens entweder die Größe der Lücke oder die Menge von in eine jeweilige Lücke (88) einzufügenden Testdaten angepasst wird, so dass die Testdaten besser der zeitlichen Lücke entsprechen.

4. Ein Verfahren nach einem beliebigen der vorstehenden Ansprüche, wobei die Schritte des Sendens und des Messens im Zeitablauf wiederholt werden, um eine verlässliche Schätzung (90) der maximalen Datenrate der Schnittstelle (64) bereitzustellen; und
die Entscheidung, ob der Anruf zugelassen werden soll oder nicht, davon abhängt, ob das Zulassen des Anrufs zu einer Überschreitung der verlässlichen Schätzung der maximalen Datenrate der Schnittstelle führen würde.

5. Ein Verfahren nach einem beliebigen der vorstehenden Ansprüche, wobei die Basisstation eine Picozellen-Basisstation und der Anruf eine Sprachverbindung ist.

6. Ein Verfahren nach einem beliebigen der vorstehenden Ansprüche, wobei die Schnittstelle (64) eine Backhaul-Schnittstelle mit einer zeitvarianten maximalen Datenrate ist.

7. Ein Verfahren nach einem beliebigen der vorstehenden Ansprüche, wobei die Schnittstelle eine Schnittstelle eines digitalen Teilnehmeranschlusses (DSL) ist.

8. Ein Verfahren nach einem beliebigen der vorstehenden Ansprüche, wobei andere für die Entscheidung, ob der Anruf zugelassen werden soll oder nicht, berücksichtigte Faktoren sind, ob (56) der Anruf ein Notruf ist, sowie (58) die Verfügbarkeit von Funkressourcen.

9. Eine Basisstation (30) für die drahtlose Telekommunikation mit einer Schnittstelle (64) zu einem Telekommunikations-Kernnetzwerk, wobei die Basisstation umfasst: Bestimmungsmittel (60), welche dazu ausgelegt sind, zu bestimmen, ob im Anschluss an eine Anrufanforderung eine Anrufverbindung aufgebaut werden soll, wobei die Bestimmungsmittel umfassen:
Testsignal-Sendemittel (74,78), welche dazu ausgelegt sind, Testdaten bei einer vorgegebenen Rate an die Schnittstelle (64) zu senden;
Messmittel (48,54), welche dazu ausgelegt sind, die Übertragung der Testdaten durch die Schnittstelle zu messen, um Informationen in Bezug auf die Datenrate, die von der Schnittstelle verarbeitet werden kann, zu erhalten;
Entscheidungsmittel (60), welche dazu ausgelegt sind, zu entscheiden, ob auf der Basis der besagten Informationen ein Anruf aufgebaut werden soll oder nicht;
und Anrufsteuerungsmittel (60), welche dazu ausgelegt sind, gemäß der besagten Entscheidung einen Anrufaufbau zu erlauben oder zu verweigern;
**dadurch gekennzeichnet, dass**
die Basisstation Mittel (74) zum Erhöhen der Datenrate der Übertragung von Benutzerdaten in ausgewählten Benutzerdatenpaketen umfasst, um zeitliche Lücken (88) zu erzeugen, in welchen die Testdaten gesendet werden,
wobei das Messmittel dazu ausgelegt ist, die Übertragung zu messen, indem es die für die Übertragung der Testdaten durch die Schnittstelle erforderliche Zeit misst, um die Datenrate, welche von der Schnittstelle verarbeitet werden kann, zu bestimmen.

## Revendications

1. Procédé dans une station de base (30) de télécommunication sans fil, comprenant une interface (64) vers un réseau de télécommunication central (66, 68, 70), pour déterminer s'il faut établir ou non un appel en réponse à une demande d'appel, le procédé comprenant les étapes suivantes :
envoi (72,74) de données de test à l'interface ;
mesure (54) de la transmission des données de test par l'interface afin d'obtenir des informations concernant le débit de données qui peut être géré par l'interface ;
décision (60) d'établir ou non l'appel en fonction desdites informations ; et,
suivant ladite décision, établissement de l'appel ou refus de l'établissement de l'appel ;
**caractérisé par**
augmentation (74) du débit de données de transmission des données d'utilisateur dans des paquets de données d'utilisateur choisis afin de créer des créneaux temporels (88) dans lesquels sont envoyées les données de test ; et
mesure de la transmission en mesurant le temps nécessaire pour émettre les données de test afin de déterminer le débit de données qui peut être géré par l'interface.

2. Procédé selon la revendication 1, comprenant en outre le relevé du débit de données mesuré des données de test en tant que débit de données maximum actuel de l'interface.

3. Procédé selon la revendication 1 ou 2, dans lequel au moins la taille de créneau ou le volume de données de test à insérer dans un créneau (88) correspondant est ajusté(e) de manière à ce que les données de test s'adaptent dans le créneau temporel.

4. Procédé selon l'une quelconque des revendications précédentes, dans lequel les étapes d'envoi et de mesure sont répétées dans le temps afin de réaliser une estimation fiable (90) du débit de données maximum de l'interface (64) ; et
la décision d'accepter ou non l'appel dépend si l'acceptation de l'appel entraînerait un dépassement de l'estimation fiable du débit de données maximum de l'interface.

5. Procédé selon l'une quelconque des revendications précédentes, dans lequel la station de base est une station de base de picocellule et l'appel est un appel vocal.

6. Procédé selon l'une quelconque des revendications précédentes, dans lequel l'interface (64) est une interface de raccordement ayant un débit de données maximum qui varie dans le temps.

7. Procédé selon l'une quelconque des revendications précédentes, dans lequel l'interface est une interface DSL (Digital Subscriber Line - Ligne d'abonné numérique).

8. Procédé selon l'une quelconque des revendications précédentes, dans lequel les autres facteurs pris en considération lors de la décision d'accepter ou non l'appel sont (56) le caractère d'urgence ou non de l'appel et (58) la disponibilité des ressources radioélectriques.

9. Station de base (30) de télécommunication sans fil, comprenant une interface (64) vers un réseau de télécommunication central, la station de base comprenant : moyens de détermination (60) utilisés pour déterminer s'il faut établir ou non un appel en réponse à une demande d'appel, les moyens de détermination comprenant :
moyens d'envoi d'un signal de test (74, 78) utilisés pour envoyer des données de test à un débit prédéterminé vers l'interface (64) ;
moyens de mesure (48, 54) utilisés pour mesurer la transmission des données de test par l'interface afin d'obtenir des informations concernant le débit de données qui peut être géré par l'interface ;
moyens de décision (60) utilisés pour décider d'établir ou non l'appel en fonction desdites informations ;
et moyens de commande (60) utilisés pour autoriser ou refuser l'établissement de l'appel en fonction de ladite décision ;
**caractérisée en ce que**
la station de base comprend des moyens (74) pour augmenter le débit de données de transmission des données d'utilisateur dans des paquets de données d'utilisateur choisis afin de créer des créneaux temporels (88) dans lesquels sont envoyées les données de test ;
les moyens de mesure sont utilisés pour mesurer la transmission en mesurant le temps nécessaire à l'interface pour émettre les données de test afin de déterminer le débit de données qui peut être géré par l'interface.
